(19) Europäisches Patentamt
European Patent Office
Office européen des brevets

(11) **EP 1 972 927 A1**

(12) **EUROPEAN PATENT APPLICATION**

(43) Date of publication:
**24.09.2008  Bulletin 2008/39**

(51) Int Cl.:
***G01N 21/64*** *(2006.01)*

(21) Application number: **07104098.4**

(22) Date of filing: **14.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Koninklijke Philips Electronics N.V.**
**5621 BA Eindhoven (NL)**

(72) Inventors:
 • **Verschuren, Coen Adrianus**
  **5621 BA Eindhoven (NL)**
 • **Bruls, Dominique Maria**
  **5621 BA Eindhoven (NL)**

 • **Immink, Albert Hendrik Jan**
  **5656 AE Eindhoven (NL)**
 • **De Theije, Femke Karina**
  **5621 BA Eindhoven (NL)**
 • **Van Der Wijk, Thea**
  **5621 BA Eindhoven (NL)**
 • **Van Der Lee, Alexander Marc**
  **5656 AE Eindhoven (NL)**
 • **Schleipen, Johannes Joseph, Hubertina Barbara**
  **5656 AE Eindhoven (NL)**

(74) Representative: **Plünnecke, Ingo**
  **Philips Intellectual Property**
  **& Standards GmbH**
  **Postfach 50 04 42**
  **52088 Aachen (DE)**

(54) **Microelectronic sensor device for detecting label particles**

(57)  The invention relates to a microelectronic sensor device for the detection of target components that comprise label particles, for example magnetic particles (1). The sensor device comprises a carrier (11) with a binding surface (12) at which target components can collect and optionally bind to specific capture elements. An incident light beam (L1) is transmitted into the carrier and totally internally reflected at the binding surface (12). The amount of light in the reflected light beam (L2) and optionally also of fluorescence light emitted by target components at the binding surface is then detected by a light detector (31). Evanescent light generated during the total internal reflection is affected (absorbed, scattered) by target components and/or label particles (1) at the binding surface (12) and will therefore be missing in the reflected light beam (L2). This can be used to determine the amount of target components at the binding surface (12) from the amount of light in the reflected light beam (L2, L2a, L2b). A magnetic field generator (41) is optionally used to generate a magnetic field (B) at the binding surface (12) by which magnetic label particles (1) can be manipulated, for example attracted or repelled.

Fig. 1

## Description

The invention relates to a microelectronic sensor device and a method for the detection of target components, for example biological molecules, comprising label particles. Moreover, it relates to a carrier and a well-plate that are particularly suited for such a sensor device.

The US 2005/0048599 A1 discloses a method for the investigation of microorganisms that are tagged with particles such that a (e.g. magnetic) force can be exerted on them. In one embodiment of this method, a light beam is directed through a transparent material to a surface where it is totally internally reflected. Light of this beam that leaves the transparent material as an evanescent wave is scattered by microorganisms and/or other components at the surface and then detected by a photodetector or used to illuminate the microorganisms for visual observation.

Based on this situation it was an object of the present invention to provide means for an improved detection of target components comprising label particles. In particular, it is desired that the method is simple and that its sensitivity and/or accuracy is improved with respect to the state of the art.

This object is achieved by a microelectronic sensor device according to claim 1, a carrier according to claim 12, a well-plate according to claim 13, and a method according to claim 20. Preferred embodiments are disclosed in the dependent claims.

The microelectronic sensor device according to the present invention serves for the qualitative or quantitative detection of target components comprising label particles, wherein the target components may for example be biological substances like biomolecules, complexes, cell fractions or cells. The term "label particle" shall denote a particle (atom, molecule, complex, nanoparticle, microparticle etc.) that has some property (e.g. optical density, magnetic susceptibility, electrical charge, fluorescence, radioactivity, etc.) which can be detected, thus indirectly revealing the presence of the associated target component. The "target component" and the "label particle" may optionally also be identical. The microelectronic sensor device comprises the following components:

a) A carrier with a binding surface at which target components can collect. The term "binding surface" is chosen here primarily as a unique reference to a particular part of the surface of the carrier, and though the target components will in many applications actually bind to said surface, this does not necessarily need to be the case. All that is required is that the target components can reach the binding surface to collect there (typically in concentrations determined by parameters associated to the target components, to their interaction with the binding surface, to their mobility and the like). The carrier should have a high transparency for light of a given spectral range, particularly light emitted by the light source that will be defined below. The carrier may for example be produced from glass or some transparent plastic.

b) A light source for emitting a light beam, called "incident light beam" in the following, into the aforementioned carrier such that it is totally internally reflected in an investigation region at the binding surface of the carrier. The light source may for example be a laser or a light emitting diode (LED), optionally provided with some optics for shaping and directing the incident light beam. The "investigation region" may be a sub-region of the binding surface or comprise the complete binding surface; it will typically have the shape of a substantially circular spot that is illuminated by the incident light beam. Moreover, it should be noted that the occurrence of total internal reflection requires that the refractive index of the carrier is larger than the refractive index of the material adjacent to the binding surface. This is for example the case if the carrier is made from glass (n = 2) and the adjacent material is water (n = 1.3). It should further be noted that the term "total internal reflection" shall include the case called "frustrated total internal reflection", where some of the incident light is lost (absorbed, scattered etc.) during the reflection process.

c) A light detector for determining the amount of light in a reflected light beam, wherein the term "reflected light beam" shall both be a unique reference to the light that is caught by the detector and imply that all light of this beam stems from the aforementioned total internal reflection of the incident light beam. It is however not necessary that the "reflected light beam" comprises all the totally internally reflected light (though this will preferably be the case), as some of this light may for example be used for other purposes or simply be lost. The detector may comprise any suitable sensor or plurality of sensors by which light of a given spectrum can be detected, for example a photodiode, a photo resistor, a photocell, or a photo multiplier tube.

The described microelectronic sensor device allows a sensitive and precise quantitative or qualitative detection of target components in an investigation region at the binding surface. This is due to the fact that the totally internally reflected incident light beam generates an evanescent wave that extends from the carrier surface a short distance into the adjacent material. If light of this evanescent wave is scattered or absorbed by target components or label particles present at the binding surface, it will be missing in the reflected light beam. The amount of light in the reflected light beam (more precisely the amount of light missing in the reflected light beam when compared to the incident light beam) is therefore an indication of the presence and the amount of target components/labels at the binding surface. One advantage of the described optical detection procedure comprises its accuracy as the evanescent waves explore only a small volume of typically 10 to 300 nm thickness next to the binding surface, thus avoiding disturbances from the bulk material behind this volume. A high sensitivity is achieved when the reflected light is measured as all effects are detected that reduce the amount of totally internally reflected light. Moreover, the optical detection can optionally be performed from a distance, i.e. without mechanical contact between the carrier and the light source or light detector.

In a preferred embodiment of the invention, the microelectronic sensor device comprises a field generator for generating a magnetic and/or an electrical field that can affect the label particles. The field generator may for example be realized by a permanent magnet, a wire, a pair of electrodes, or a coil. The generated field may affect the label particles for instance by inducing a magnetization or a polarization and/or by exerting forces on them. Such a microelectronic sensor device allows a versatile manipulation of target components via fields, which may for example be used to accelerate the collection of target components at the binding surface and/or to remove undesired (unbound or, in a stringency test, weakly bound) components from the binding surface.

In the general case, the space next to the carrier at the side of the binding surface may be arbitrarily designed. It is for example possible that this space is exterior to the microelectronic sensor device and that target components are applied to the binding surface by spraying or painting; the space may also be open to the surroundings for detecting target components in e.g. the ambient atmosphere. Moreover, it is possible that the target components reach the binding surface through the carrier, e.g. by diffusion. In preferred embodiments of the invention, the microelectronic sensor device comprises however a sample chamber which is located adjacent to the binding surface and in which a sample with target components can be provided. The sample chamber is typically an empty cavity or a cavity filled with some substance like a gel that may absorb a sample substance; it may be an open cavity, a closed cavity, or a cavity connected to other cavities by fluid connection channels.

As was already mentioned, the microelectronic sensor device may be used for a qualitative detection of target components, yielding for example a simple binary response with respect to a particular target molecule ("present" or "not-present"). Preferably the sensor device comprises however an evaluation module for quantitatively determining the amount of target components in the investigation region from the detected reflected light. This can for example be based on the fact that the amount of light in an evanescent light wave, that is absorbed or scattered by target components, is proportional to the concentration of these target components in the investigation region. The amount of target components in the investigation region may in turn be indicative of the concentration of these components in an adjacent sample fluid according to the kinetics of the related binding processes.

In a further development of the aforementioned embodiment, the microelectronic sensor device comprises a recording module for monitoring the determined amount of totally internally reflected light over an observation period. Thus it will be possible to monitor the kinetics with which target components collect at or depart from the binding surface. This may reveal valuable information about the target components and/or the prevailing ambient conditions. The evaluation module and/or the recording module are typically coupled to the light detector and may be realized by some data processing hardware, e.g. a microcomputer, together with associated software.

Up to now the description of the microelectronic sensor device included the case that only a single investigation region is present on the binding surface. In the following, several embodiments of the microelectronic sensor device will be considered in which the binding surface comprises a plurality of investigation regions at which different incident light beams can be totally internally reflected. One carrier then allows the processing of several investigation regions and thus for example the search for different target components, the observation of the same target components under different conditions and/or the sampling of several measurements for statistical purposes. The "different incident light beams" may optionally be components of one broad light beam that is homogeneously generated by the light source.

The different incident light beams that are used in the aforementioned embodiment may be different with respect to time. This is for example the case if the microelectronic sensor device comprises a scanning module for sequentially coupling the light source to different investigation regions. Alternatively or additionally, it may comprise a scanning module for optically coupling the light detector to different investigation regions on the binding surface. The scanning modules may for example comprise optical components like lenses or mirrors for directing the incident or the reflected light beam in a suitable way. The scanning modules may also comprise means for moving the carrier with respect to the light source and/or light detector.

In another embodiment of the microelectronic sensor device with a plurality of investigation regions, a plurality of light sources and/or a plurality of light detectors is present that are directed to different investigation regions at the binding surface. In this case it is possible to process a plurality of investigation regions simultaneously, thus speeding-up the associated measurement process accordingly. This embodiment can of course be combined with the previous one, i.e. there may for example be a scanning module for scanning the incident light beams of a plurality of light sources over different arrays of investigation regions and/or a scanning module for directing the reflected light beams from different arrays of investigation regions to a plurality of light detectors. By using scanning modules, the number of light sources/detectors can be kept smaller than the number of investigation regions.

In another embodiment with a plurality of investigation regions, the microelectronic sensor device comprises a plurality of individually controllable (magnetic or electrical) field generators that are associated to different investigation regions. In this case it is possible to manipulate the label particles in each investigation region individually according to the requirements of the particular tests that shall be performed there.

The microelectronic sensor device may in principle be used with any kind of label particles. It is however preferably provided with label particles that specifically fit to the other components of the device. The sensor device may especially comprise label particles with a mantle of a transparent material, wherein this mantle typically covers (completely or partially) one or more kernels of another material, e.g. iron-oxide grains. In this case light of an evanescent light wave at the binding surface can readily enter the label particles where it is absorbed and/or scattered and thus lost for the reflected light beam. The transparent material of the mantle may particularly be a material with a similar refractive index as the material of the carrier, because this optimizes the transition of light from the carrier to the label particles. The mantle may for example consist of the same material as the carrier.

The microelectronic sensor device may optionally comprise a (further) light detector for determining (qualitatively or quantitatively) fluorescence light emitted by target components at the binding surface. The fluorescence can be stimulated by the evanescent wave of the incident light beam in a small volume adjacent to the binding surface and then be detected, thus indicating the presence (and amount) of fluorescent target components.

The invention further relates to a carrier for providing a sample to be investigated, wherein said carrier may particularly be suited as a carrier for a microelectronic sensor device of the kind described above. The carrier comprises a sample chamber in which a sample can be provided and which has a transparent inspection wall. The inspection wall has on its interior side a binding surface at which components of a sample can collect. On its exterior side, the inspection wall has at least one optical structure which is designed such that

   (i) an incident light beam which is directed from outside the carrier onto the optical structure enters the inspection wall,
   (ii) said incident light beam is (at least one times) totally internally reflected in an investigation region at the binding surface, and
   (iii) a reflected light beam and/or fluorescence light emitted by target components at the binding surface leaves the inspection wall through the optical structure, preferably in a direction away from the carrier.

The inspection wall will typically have the basic form of a plate with a substantially parallel interior and exterior surface, wherein the interior surface comprises the binding surface and wherein the optical structure projects outwards from the exterior surface. Moreover, the inspection wall can in principle be any part of the wall of the sample chamber, for example a side wall or the top. Preferably, the inspection wall is however a part of the bottom of the carrier (or the whole bottom), which has two advantages: First, sample components underlying sedimentation will concentrate at the binding surface of the bottom. Second, the components of an associated instrument can be disposed below said bottom, thus leaving space at the sides of the carrier for a possible arrangement of further carriers.

The described carrier has the advantage that a sample inside its sample chamber can optically be investigated with an incident light beam that is totally internally reflected, thus providing an evanescent field in a small volume at the binding surface. Effects like absorption or scattering taking place in this small volume will affect the reflected light beam which leaves the carrier. Additionally or alternatively, fluorescence may be stimulated by the evanescent wave in fluorescent target components and thus provide a further indicator for the target. As both the incident light beam and the reflected light beam are directed from the outside towards the carrier or vice versa, the corresponding light source and light detector can be arranged a distance away and separate from the carrier.

The invention further relates to a well-plate which comprises a plurality of carriers of the kind described above, i.e. a plurality of sample chambers with transparent inspection walls having on their interior side a binding surface and on their exterior side at least one optical structure, wherein said optical structure allows an incident light beam coming from outside the carrier to enter the inspection wall, to be totally internally reflected at the binding surface, and then to leave the inspection wall as a reflected light beam that is directed away from the carrier.

The well-plate combines a plurality of the carriers described above in an array and thus allows a parallel investigation of a multitude of samples and/or of one sample in a multitude of investigation assays. As the well-plate is based on the described carrier, reference is made to the above description for more details on the advantages, features and improvements of said well-plate.

In the following various embodiments of the invention will be described that can be applied to a microelectronic sensor device, a carrier and a well-plate of the kind described above.

While it is in principle possible that the carrier has some dedicated structure with multiple components of different materials, it is preferred that the carrier is homogenously fabricated from a transparent material, for example a transparent plastic. The carrier can thus readily be produced for example by injection moulding.

The investigation region of the carrier may optionally be covered with at least one type of capture element that can bind one or more target components. A typical example of such a capture element is an antibody to which corresponding antigens can specifically bind. By providing the investigation region with capture elements that are specific to certain target components, it is possible to selectively enrich these target components in the investigation region. Moreover, undesired target components can be removed from the binding surface by suitable (e.g. magnetic) repelling forces (that do not break the bindings between desired target components and capture elements). The binding surface may preferably be provided with several types of capture elements that are specific for different target components. In a microelectronic sensor device with a plurality of investigation regions, there are preferably at least two investigation regions having different capture elements such that these regions are specific for different target components.

According to another embodiment of the invention, the surface of the carrier is substantially perpendicular to the incident light beam and/or to the reflected light beam in the region where this beam enters or leaves the carrier, i.e. the angle of incidence lies in a range of about $\pm 5°$ around 90°. In this case the direction of the incident light beam and/or the reflected light beam will not or only minimally change during the transition from a surrounding medium into the carrier or vice versa. Moreover, reflection will be minimized. Additionally or alternatively, the corresponding regions may also have an anti-reflection coating. To prevent feedback into the light source (e.g. a laser), it may be preferable to have the incident beam (at most) a few degrees off-perpendicular.

The carrier may particularly comprise at least one surface with a form similar or identical to a hemisphere or a truncated pyramid. As will be discussed in more detail with reference to the Figures, these forms function like lenses and/or prisms and thus provide a favorable guidance of the incident and the reflected light beam.

The carrier may further optionally comprise a cavity in which a (magnetic or electrical) field generator can at least partially be disposed. The source of the field can thus be positioned as close as possible to the binding surface, allowing to generate high field strengths in the investigation region with minimal effort (e.g. electrical currents) and with minimal disturbances for other regions (e.g. neighboring investigation regions). Moreover, such a cavity can be used to center the carrier with respect to the field generator, the light source and the light detector.

While the microelectronic sensor device may in principle be constructed as a "one-piece" unit of solidly mounted components, it is preferred that the carrier is designed as an exchangeable component of the device, for example a well-plate. Thus it may be used as a low-cost disposable part, which is particularly useful if it comes into contact with biological samples and/or if its coating (e.g. with antibodies) is used up during one measurement process.

The invention further relates to a method for the detection of target components comprising label particles, wherein said method comprises the following steps:

    a) Collecting target components at the binding surface of a carrier.

    b) Directing an incident light beam into the carrier such that it is totally internally reflected in an investigation region at the binding surface.

    c) Determining the amount of light in a reflected light beam which by definition comprises only totally internally reflected light of the incident light beam.

The method comprises in general form the steps that can be executed with a microelectronic sensor device of the kind described above. Therefore, reference is made to the preceding description for more information on the details, advantages and improvements of that method.

In a preferred embodiment of the method, the label particles are manipulated by a magnetic and/or an electrical field, wherein this manipulation may particularly comprise the attraction of the particles to or their repulsion from the investigation region.

These and other aspects of the invention will be apparent from and elucidated with reference to the embodiment(s) described hereinafter. These embodiments will be described by way of example with the help of the accompanying drawings in which:

| Figure 1 | schematically shows the general setup of a microelectronic sensor device according to the present invention; |
|---|---|
| Figure 2 | shows a microelectronic sensor device with a well having a spherical bottom; |
| Figure 3 | shows the design of Figure 2 with additional means for focusing a light beam; |
| Figure 4 | shows a well having a plurality of hemispheres at the bottom; |
| Figure 5 | shows a well having a bottom in the form of a truncated pyramid; |
| Figure 6 | shows the design of Figure 5 with a cavity for an electromagnet; |
| Figure 7 | is a diagram showing a normalized measurement signal s over time t for solutions with different concentrations of morphine |

labeled with magnetic particles;

Figure 8     is a diagram showing a normalized measurement signal s over time t for solutions containing morphine labeled with magnetic particles and different concentrations of free morphine;

Figure 9     illustrates the formation of pillars of magnetic beads in a magnetic field;

Figure 10     is a diagram showing a normalized measurement signal s over time t for solutions with different concentrations of morphine labeled with magnetic particles when only one step of magnetic attraction is applied;

Figure 11     is a diagram showing a normalized measurement signal s over time t for solutions containing saliva and morphine labeled with magnetic particles;

Figure 12     is a diagram showing a normalized measurement signal s over time t for a two-step PTH assay in comparison to a solution containing no PTH;

Figure 13     shows a dose-response curve for PTH in buffer for optical detection;

Figure 14     is a diagram like that of Figure 12 for different concentrations of PTH;

Figure 15     shows a dose-response curve for PTH in buffer and in blood for optical detection;

Figure 16     shows a bead-response curve for detection with a GMR sensor;

Figure 17     shows a bead-response curve for optical detection.

Like reference numbers or numbers differing by integer multiples of 100 refer in the Figures to identical or similar components.

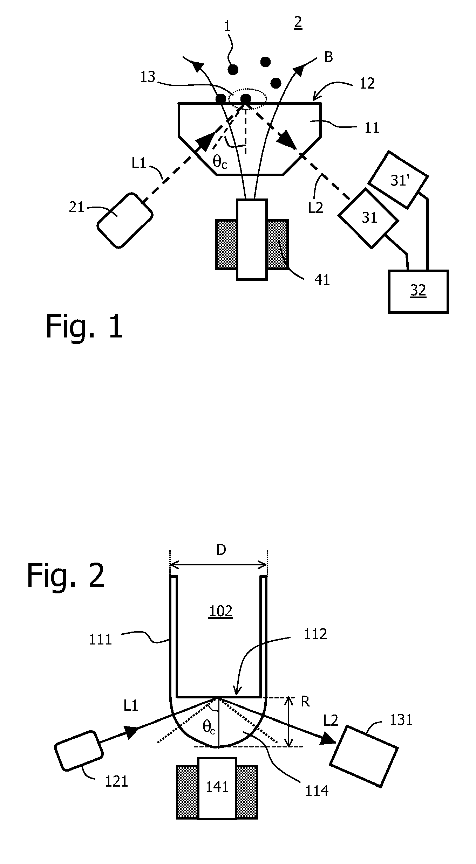

Figure 1 shows the general setup of a microelectronic sensor device according to the present invention. A central component of this device is the carrier 11 that may for example be made from glass or transparent plastic like poly-styrene. The carrier 11 is located next to a sample chamber 2 in which a sample fluid with target components to be detected (e.g. drugs, antibodies, DNA, etc.) can be provided. The sample further comprises magnetic particles 1, for example superparamagnetic beads, wherein these particles 1 are usually bound as labels to the aforementioned target components (for simplicity only the magnetic particles 1 are shown in the Figure). It should be noted that instead of magnetic particles other label particles, for example electrically charged of fluorescent particles, could be used as well.

The interface between the carrier 11 and the sample chamber 2 is formed by a surface called "binding surface" 12. This binding surface 12 may optionally be coated with capture elements, e.g. antibodies, which can specifically bind the target components.

The sensor device comprises a magnetic field generator 41, for example an electromagnet with a coil and a core, for controllably generating a magnetic field B at the binding surface 12 and in the adjacent space of the sample chamber 2. With the help of this magnetic field B, the magnetic particles 1 can be manipulated, i.e. be magnetized and particularly be moved (if magnetic fields with gradients are used). Thus it is for example possible to attract magnetic particles 1 to the binding surface 12 in order to accelerate the binding of the associated target component to said surface.

The sensor device further comprises a light source 21, for example a laser or an LED, that generates an incident light beam L 1 which is transmitted into the carrier 11. The incident light beam L1 arrives at the binding surface 12 at an angle larger than the critical angle $\theta_c$ of total internal reflection (TIR) and is therefore totally internally reflected as a "reflected light beam" L2. The reflected light beam L2 leaves the carrier 11 through another surface and is detected by a light detector 31, e.g. a photodiode. The light detector 31 determines the amount of light of the reflected light beam L2 (e.g. expressed by the light intensity of this light beam in the whole spectrum or a certain part of the spectrum). The measurement results are evaluated and optionally monitored over an observation period by an evaluation and recording module 32 that is coupled to the detector 31.

The Figure shows a further light detector 31' that can alternatively or additionally be used to detect fluorescence light emitted by fluorescent particles 1 which were stimulated by the evanescent wave of the incident light beam L1. As this fluorescence light is usually emitted isotropically to all sides, the detector 31' can in principle be disposed anywhere, e.g. also above the binding surface 12. Moreover, it is of course possible to use the detector 31, too, for the sampling of fluorescence light, wherein the latter may for example spectrally be discriminated from reflected light L2. Though the following description concentrates on the measurement of reflected light, the principles discussed here can mutatis mutandis be applied to the detection of fluorescence, too.

The described microelectronic sensor device applies optical means for the detection of magnetic particles 1 and the target components one is actually interested in. For eliminating or at least minimizing the influence of background (e.g. of the sample fluid, such as saliva, blood, etc.), the detection technique should be surface-specific. This is achieved by using the principle of frustrated total internal reflection which is explained in the following.

According to Snell's law of refraction, the angles

$\theta_A$ and $\theta_B$ with respect to the normal of an interface between two media A and B satisfy the equation

$$n_A \sin\theta_A = n_B \sin\theta_B$$

with $n_A$, $n_B$ being the refractive indices in medium A and B, respectively. A ray of light in a medium A with high refractive index (e.g. glass with $n_A = 2$) will for example refract away from the normal under an angle $\theta_B$ at the interface with a medium B with lower refractive index such as air ($n_B = 1$) or water ($n_B \approx 1.3$). A part of the incident light will be reflected at the interface, with the same angle as the angle $\theta_A$ of incidence. When the angle $\theta_A$ of incidence is gradually increased, the angle $\theta_B$ of refraction will increase until it reaches 90°. The corresponding angle of incidence is called the critical angle, $\theta_c$, and is given by $\sin\theta_c, = n_B/n_A$. At larger angles of incidence, all light will be reflected inside medium A (glass), hence the name "total internal reflection". However, very close to the interface between medium A (glass) and medium B (air or water), an evanescent wave is formed in medium B, which decays exponentially away from the surface. The field amplitude as function of the distance z from the surface can be expressed as:

$$\exp\left(-k\sqrt{n_A^2 \sin^2(\theta_A) - n_B^2} \cdot z\right)$$

with $k = 2\pi/\lambda$, $\theta_A$ being the incident angle of the totally reflected beam, and $n_A$ and $n_B$ the refractive indices of the respective associated media.

For a typical value of the wavelength $\lambda$, e.g. $\lambda = 650$ nm, and $n_A = 1.53$ and $n_B = 1.33$, the field amplitude has declined to $\exp(-1) \approx 0.37$ of its original value after a distance z of about 228 nm. When this evanescent wave interacts with another medium like the magnetic particles 1 in the setup of Figure 1, part of the incident light will be coupled into the sample fluid (this is called "frustrated total internal reflection"), and the reflected intensity will be reduced (while the reflected intensity will be 100% for a clean interface and no interaction). Depending on the amount of disturbance, i.e. the amount of magnetic beads on or very near (within about 200 nm) to the binding surface 12 (not in the rest of the sample chamber 2), the reflected intensity will drop accordingly. This intensity drop is a direct measure for the amount of bonded magnetic beads 1, and therefore for the concentration of target molecules. When the mentioned interaction distance of the evanescent wave of about 200 nm is compared with the typical dimensions of anti-bodies, target molecules and magnetic beads, it is clear that the influence of the background will be minimal. Larger wavelengths $\lambda$ will increase the interaction distance, but the influence of the background liquid will still be very small.

The described procedure is independent of applied magnetic fields. This allows real-time optical monitoring of preparation, measurement and washing steps. The monitored signals can also be used to control the measurement or the individual process steps.

For the materials of a typical application, medium A of the carrier 11 can be glass and/or some transparent plastic with a typical refractive index of 1.52. Medium B in the sample chamber 2 will be water-based and have a refractive index close to 1.3. This corresponds to a critical angle $\theta_c$ of 60°. An angle of incidence of 70° is therefore a practical choice to allow fluid media with a somewhat larger refractive index (assuming $n_A = 1.52$, $n_B$ is allowed up to a maximum of 1.43). Higher values of $n_B$ would require a larger $n_A$ and/or larger angles of incidence.

Advantages of the described optical read-out combined with magnetic labels for actuation are the following:

- Cheap cartridge: The carrier cartridge 11 can consist of a relatively simple, injection-molded piece of polymer material that may also contain fluidic channels.

- Large multiplexing possibilities for multi-analyte testing: The binding surface 12 in a disposable cartridge can be optically scanned over a large area. Alternatively, large-area imaging is possible allowing a large detection array. Such an array (located on an optical transparent surface) can be made by e.g. ink-jet printing of different binding molecules on the optical surface.
  The method also enables high-throughput testing in well-plates by using multiple beams and multiple detectors and multiple actuation magnets (either mechanically moved or electro-magnetically actuated).

- Actuation and sensing are orthogonal: Magnetic actuation of the magnetic particles (by large magnetic fields and magnetic field gradients) does not influence the sensing process. The optical method therefore allows a continuous monitoring of the signal during actuation. This provides a lot of insights into the assay process and it allows easy kinetic detection methods based on signal slopes.

- The system is really surface sensitive due to the exponentially decreasing evanescent field.

- Easy interface: No electrical interconnect between cartridge and reader is necessary. An optical window is the only requirement to probe the cartridge. A contact-less read-out can therefore be performed.

- Low-noise read-out is possible.

In the environment of a laboratory, well-plates are typically used that comprise an array of many sample chambers ("wells") in which different tests can take place in parallel. Figures 2-6 show different possible embodiments of one well of such a well-plate that are particularly suited for an application of the explained measurement principle. The production of these (disposable) wells is very simple and cheap as a single injection-moulding step is sufficient.

The light source 121 shown in Figure 2 is arranged to produce a parallel light beam L1, incident at the well bottom surface at an angle larger than the critical angle $\theta_c$. To prevent excess reflection of this incident light beam L1 at the first interface from air to the carrier 111 (e.g. glass or plastic material), the bottom of the well comprises a hemispherical shape 114 of radius R, with its centre coinciding with the detection surface 112. The incident light beam L1 is directed towards this same centre. At the reflection side, a photodetector such as a photodiode 131 is positioned to detect the intensity of the reflected light beam L2. A typical diameter D of the well 102 ranges from 1 to 8 mm. The Figure further indicates a magnet 141 for generating magnetic actuation fields inside the well 102 (this magnet is not shown in the following Figures for simplicity).

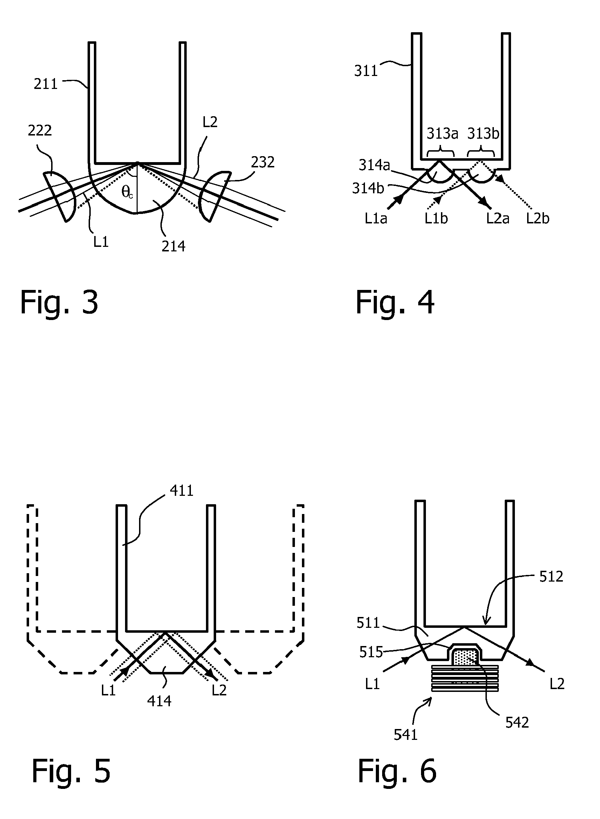

Figure 3 shows an alternative embodiment in which the light source comprises some optical element like a lens 222 to produce an incident light beam L1 which is substantially focused to the centre of the hemisphere 214. At the detection side, a similar optical element 232 can be used to collect and detect the light intensity of the reflected light beam L2.

In a further development of the measuring procedure, multiple incident light beams and reflected light beams can be used to simultaneously detect the presence of different target molecules at different locations in the same well. Figure 4 shows in this respect a well with multiple hemispheres 314a, 314b on the well bottom that can be used to couple the light from multiple incident light beams L1a, L1b to respective investigation regions 313a, 313b on the bottom of the well. Multiple photodetectors (not shown) may be used in this case to measure the multiple reflected light beams L2a, L2b.

Figure 5 shows an alternative embodiment in which a prism or truncated pyramidal structure 414 is used to couple the light of the incident light beam L1 and the reflected light beam L2. The sloped edges of the pyramid should be substantially perpendicular to these light rays. Advantages of this design are that it is simple to produce and does not block beams from neighboring areas. Neighboring wells are indicated in this Figure by dashed lines.

As indicated in Figure 5, it is possible to use a single, parallel incident light beam L1 with a diameter covering all detection areas on the well bottom. As a detector, multiple photodiodes can be used, aligned with each individual detection area. Alternatively, a CCD or CMOS chip (not shown) such as used in a digital camera can be used to image the reflected intensity response of the entire well bottom, including all detection areas. Using appropriate signal processing, all signals can be derived as with the separate detectors, but without the need for prior alignment.

Figure 6 shows a further embodiment in which the well bottom 511 comprises an open cavity 515 with its center outside the optical path of the incident light beam(s) L1 and the reflected light beam(s) L2. This allows the following advantageous features:

- A (T-shaped) ferrite core 542 of a magnetic coil 541 for improved field intensity and concentration can be placed close to the binding surface 512, allowing a compact and low-power design.

- A self-aligning structure is achieved: if the optics and the magnetic field generator 541 are fixed, an auto-alignment of the well on the ferrite core 542 takes place.

The magnetic beads 1 that are used in the described embodiments of the invention are typically poly-styrene spheres filled with small magnetic grains (e.g. of iron-oxide). This causes the beads to be super-paramagnetic. The refractive index of poly-styrene is nicely matched to the refractive index of a typical substrate material of well-plates. In this way optical outcoupling of light is enhanced.

Experimental results A

In the following, some experimental results will be described that were obtained in a setup with a well-plate like that of Figure 2. Standard 96 wells polystyrene titerplates were used with a flat bottom (6 mm in diameter, about 1 mm bottom thickness). To get the hemispherical bottom, glass lenses were attached to the bottom using refractive index matched immersion oil (n = 1.55). The glass lenses were polished down from a hemispherical shape (6 mm diameter) to a thickness of 2 mm. The model assay chosen for the set of experiments is drugs of abuse in saliva. Drugs of abuse are generally small molecules that only possess one epitope and for this reason cannot be detected by a sandwich assay. A competitive or inhibition assay is the method to detect these molecules. A well-known competitive assay setup is to couple the target molecules of interest onto a surface, and link antibodies to a detection tag (e.g. enzyme, fluorophore, or magnetic particle). This system was used to perform a competitive assay between the target molecules from the sample and the target molecules on the surface, using the tagged antibodies. The tag in these experiments was a magnetic particle. Upon actuation, a permanent magnet was placed under the well by mechanical movement. The distance between the bottom of the well and the magnet was about 2 mm. A permanent magnet in the well was used for magnetic washing.

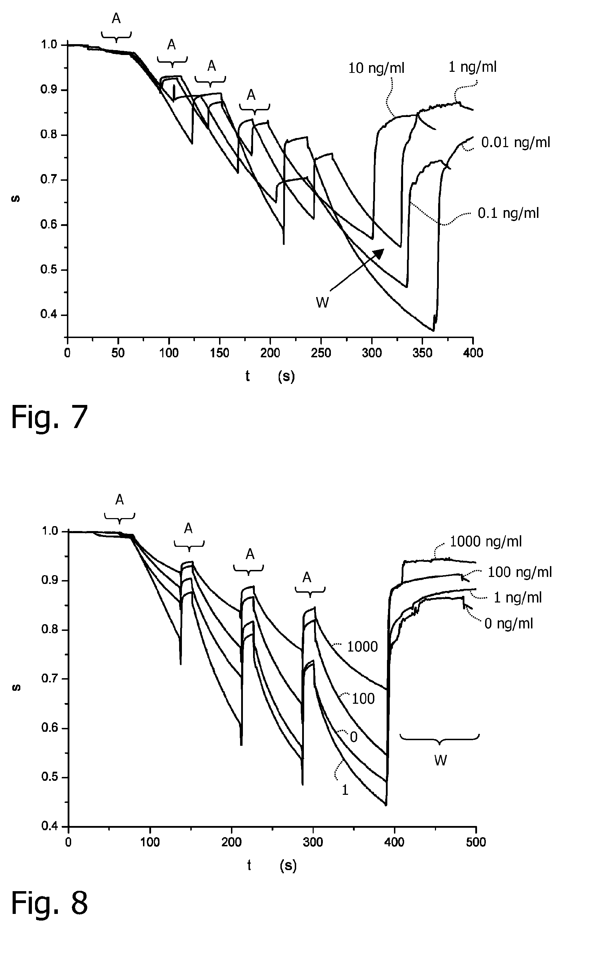

Figure 7 shows the normalized measurement signal s over time t for a first sensitivity test. For that, the bottom of a well was prepared for detection of the target molecules. The target under investigation was morphine. Morphine is a small molecule, with only one epitope, so a competitive assay has to be performed to indicate the amount of morphine in a sample. A clear polystyrene surface (96 wells titerplate) was coated for 2 hrs with a range of concentrations of BSA-morphine from 1 pg/ml to 1 μg/ml. Then functionalized superparamagnetic nanoparticles "MP" (300 nm Carboxyl-Adembeads functionalized with monoclonal anti morphine antibodies) solved in PBS + 10 mg/ml BSA + 0.65 % Tween-20 were inserted into the wells (1:20 dilution of MPs, total amount of solution was 50μl). The MPs were attracted to the surface by alternated application of magnetic forces (in the order of 10 fN) as indicated by symbol A in Figure 7. In the end, unbound particles were removed from the surface by a washing step, indicated by symbol W in Figure 7. The Figure shows that the lowest concentration of BSA-morphine (10 pg/ml) yields the largest dynamic measurement range. Also, the steepness of the curve after actuation is the largest, enabling fast response/short measuring time and the highest sensitivity.

To test the sensitivity of the assay, the ability of free morphine to compete for functionalized MP binding to the surface was tested. Figure 8 shows the resulting normalized signal s collected by the detector as a function of time t. A clear polystyrene surface (96 wells titerplate) was coated for 2 hrs with 10 pg/ml BSA-morphine. MPs functionalized with anti-morphine antibodies premixed with a defined amount of free morphine solved in PBS + 10 mg/ml BSA + 0.65 % Tween-20 were inserted into the wells (1:20 dilution of MPs, total amount of solution was 40 μl). As described above and indicated in the Figure, the MPs were actuated four times at t = 30 s, t = 140 s, t = 210 s, t = 290 s during 15 sec (cf. symbol A). At t = 390 s the non-bound MPs have been removed from the well by means of magnetic washing W, i.e. the non-bound MPs are removed by applying a magnetic force using a permanent magnet in the fluid above the binding surface.

It can be seen from the Figure that for the highest concentrations of free morphine, the signal reduction (after magnetic washing W) is low, while for a low concentration of free morphine the signal reduction is high (a high concentration of MPs on the surface leading to a clear reduction in signal after magnetic washing W).

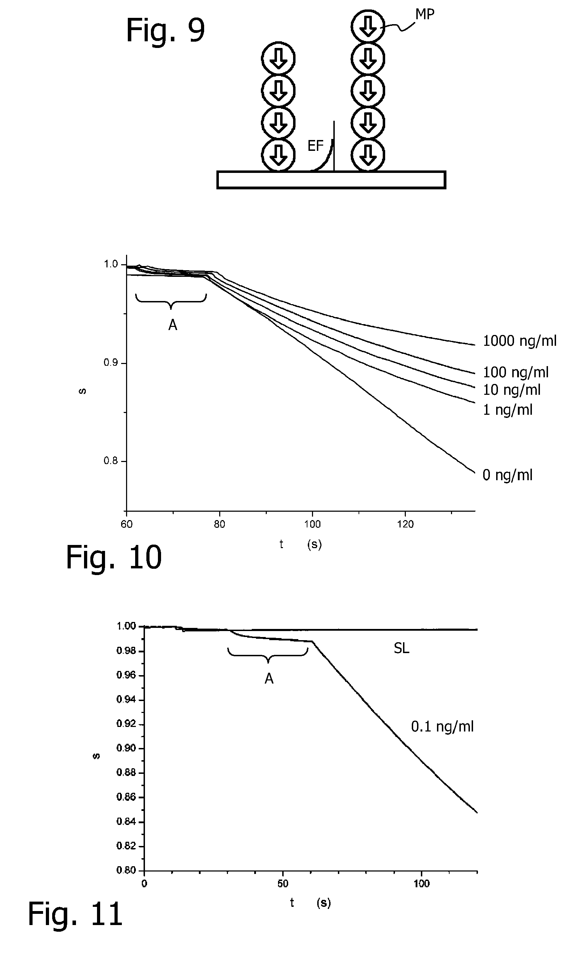

The signal reduction during actuation and magnetic relaxation as found in these experiments, together with information already collected from microscopic investigations proposes the following interpretation of the results: Upon magnetic actuation, MPs are concentrated to the surface, without showing an increase in binding to the surface (no signal decrease). Upon removing of the magnetic field, the signal drops indicating MPs binding to the surface. Application of a magnetic field then induces pillar formation: MPs become magnetized and those freely movable (a-specifically bound MPs and MPs freely in solution) will bind to the specific bound MPs in the direction of the magnetic field lines, which are perpendicular to the binding surface. This state is illustrated in Figure 9, which also indicates the evanescent field EF. Since the evanescence detection system will only detect MPs at the surface, pillar formation during magnetic actuation will result in a reduction in signal change. Upon removal of the magnetic field, the MPs will lose their magnetic property, and fall to the surface again where binding can take place.

To obtain a fast assay, the actuation scheme can be optimized using the above results.
Figure 10 shows a dose-response curve on polystyrene wells coated with 10 pg/ml BSA-morphine. MPs functionalized with anti-morphine antibodies premixed with a defined amount of free morphine solved in PBS + 10 mg/ml BSA + 0.65 % Tween-20 were inserted into the wells (1: 20 dilution of MPs, total amount of solution was 40 μl, final morphine concentrations between 1 and 1000 ng/ml). MPs were actuated at A using a permanent magnet below the well for 15 seconds, to up-concentrate the MPs near the surface. Next, the MPs were allowed to bind to the surface for 60 seconds. The data show that already after 20 seconds the binding rate of magnetic particles to the surface is a direct measure for the concentration of free morphine in solution. This means that the measurement procedure can be simplified and more rapid, since no washing step is needed. For this to occur rapidly, the magnetic up-concentration step A is necessary.

Next, the background signal from saliva was tested. Filtered saliva was introduced in a well and the signal was followed for 120 seconds. The background is negligible as can be seen in Figure 11. As a comparison, the signal of MPs in PBS + 10 mg/ml BSA + 0.65 % Tween20 mixed with 0.1 ng/ml morphine is included as well. At t = 13 s, both the saliva (SL) and the morphine solution + MPs were injected. It can be seen that the background signal from the saliva is < 1 % and can be neglected.

Experimental results B

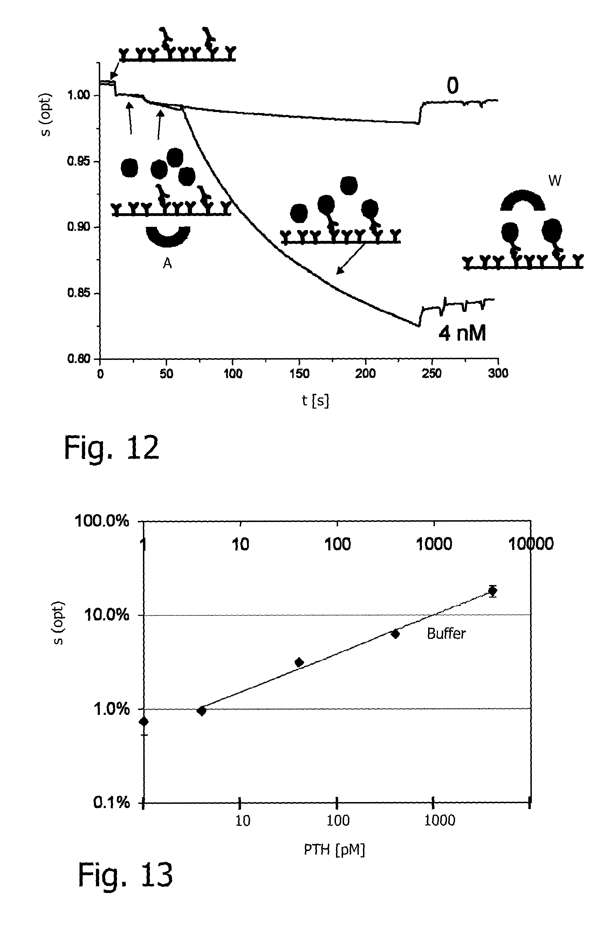

To verify the sensitivity of the detection method a two-step PTH (PTH = parathyroid hormone) assay was carried out in the described well-plates on an optical substrate. In Figure 12 the signal transients s (arbitrary units) are plotted as function of time t for both a blanc (0 nM, upper curve) and a relatively high (4 nM) concentration. A clear difference in the kinetic binding regime is observed and also a clear signal difference after washing W remains.

In order to compare magnetic read-out (via Giant Magneto-Resistance (GMR) sensors as they are for example described in the WO 2005/010543 A1 or WO 2005/010542 A2) with optical read-out (via the principle of frustrated total internal reflection explained above), the PTH dose response curve is plotted in Figure 13.

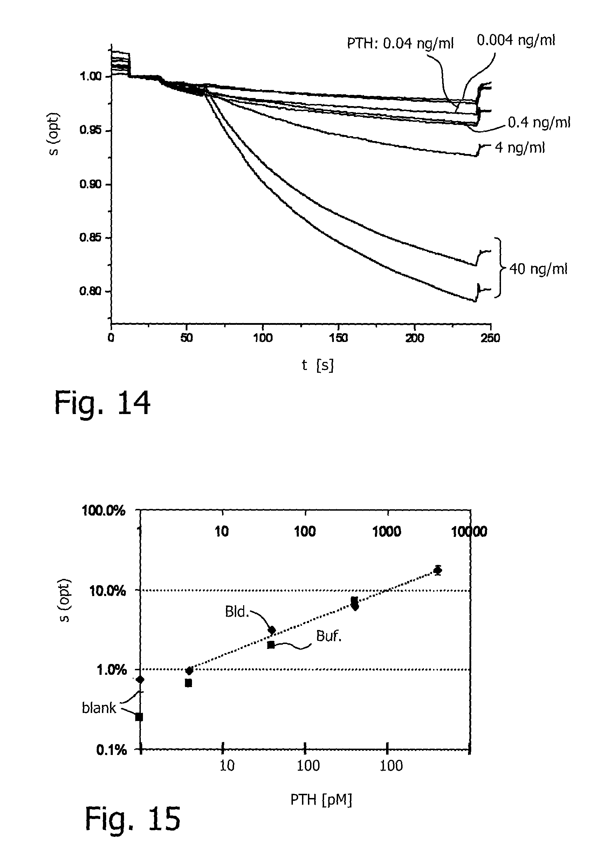

The corresponding transient curves for the optically detected PTH assay are given in Figure 14. The dose-response curve in Figure 13 is measured in a buffer matrix. The curve shows the optical signal s as percentage of the signal caused by reflection from an empty substrate. It is interesting to note that the curve is linear on a log-log scale (similar to the magnetically detected curve). Furthermore, detection limits can be calculated according to 'blanc+2*standard deviation of the blanc' (wherein "blanc" indicates the signal level when testing a sample with zero target concentration).

For the magnetic read-out this value is equal to 3 pM. For the optical experiment, which was done with a very basic experimental set-up, this value was equal to 13 pM. It can be concluded that both detection techniques seem to have the same sensitivity.

Next it is very important to verify the background signal for the optical detection method when measuring in complex matrices. For this reason the same PTH assay was carried out in a blood matrix. From the results shown in Figure 15 (Bld. = blood, Buf. = buffer) it is clear that the resulting dose-response very well matches the curve that was measured in buffer. Also the blank signal is very low. This nice property is attributed to the fact that the total internal reflection is caused by the refractive index difference between the optical substrate material and the matrix. The matrix can consist of different components such as plasma, (red blood) cells, etc. However, all these components have a significantly lower refractive index than the substrate material. Therefore, total internal reflection is not influenced by the matrix. Only when beads are bound (e.g. high-index polystyrene with magnetic grains) the total internal reflection is frustrated and a drop in reflected intensity can be measured.

Experimental results C

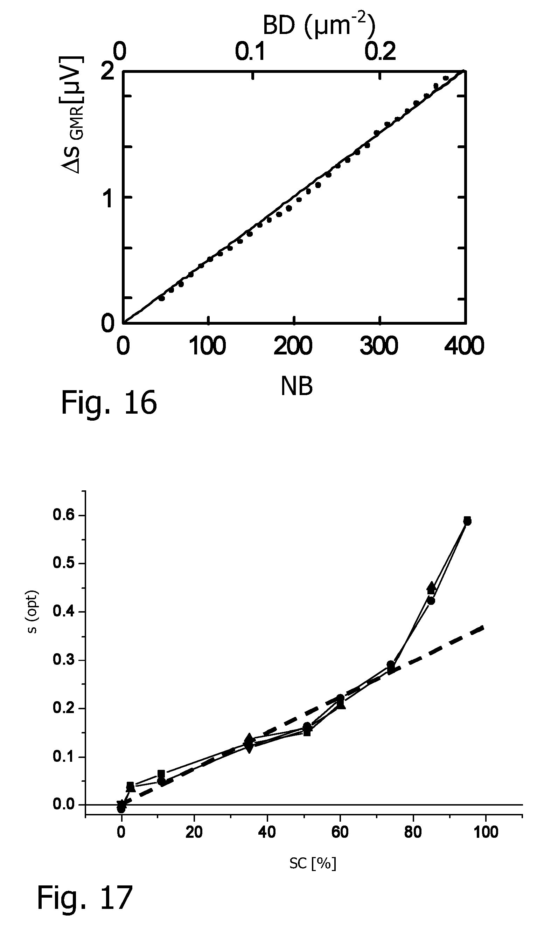

An important proof for the proposed technology is the so-called bead-response curve. It gives an indication of the signal change per bead attached to the sensor surface. Ideally, detection of a single bead is possible (in presence of noise, disturbances). In this situation further improving the detection technology is not needed anymore. The biological detection limit can then only be improved by methods such as upconcentration of beads (in a catch-assay), etc. Figure 16 shows the bead-response curve in case of detection with a GMR-type of sensor and 300 nm beads ($\Delta s$ = signal change; BD = bead density; NB = number of beads). For these beads the detection limit was 3 beads on 40 $\mu m^2$ for a sampling frequency of 1 Hz.

In order to estimate the bead-response for optical detection, a number of samples (glass-slides) were prepared with various bead concentrations. The resulting surface coverage was determined using an optical microscope, followed by a measurement of the optical signal (change) s compared to a clean reference sample without beads. The experimental data as obtained with a simple set-up are plotted in Figure 17. In this set-up, the noise level corresponds to a signal change at a surface coverage SC of 0.01%. These data show that the sensitivity of this technique is at least similar to state-of-the-art results using GMR sensors at the same bead concentrations.

In summary, the invention relates to a microelectronic sensor device for the detection of target components that comprise label particles, for example magnetic particles 1. The sensor device comprises a carrier 11 with a binding surface 12 at which target components can collect and optionally bind to specific capture elements. An incident light beam L1 is transmitted into the carrier and totally internally reflected at the binding surface 12. The amount of light in the reflected light beam L2 is then detected by a light detector 31. Evanescent light generated during the total internal reflection interacts with the target components and/or label particles 1 at the binding surface 12 leading to absorption and/or scattering and will therefore be missing in the reflected light beam L2. This can be used to determine the amount of target components at the binding surface 12 from the amount of light in the reflected light beam L2, L2a, L2b. A magnetic field generator 41 is optionally used to generate a magnetic field B at the binding surface 12 by which the magnetic label particles 1 can be manipulated, for example attracted or repelled.

While the invention was described above with reference to particular embodiments, various modifications and extensions are possible, for example:

- In addition to molecular assays, also larger moieties can be detected with sensor devices according to the invention, e.g. cells, viruses, or fractions of cells or viruses, tissue extract, etc.
- The detection can occur with or without scanning of the sensor element with respect to the sensor surface.
- Measurement data can be derived as an end-point measurement, as well as by recording signals kinetically or intermittently.
- The particles serving as labels can be detected directly by the sensing method. As well, the particles can be further processed prior to detection. An example of further processing is that materials are added or that the (bio)chemical or physical properties of the label are modified to facilitate detection.
- The device and method can be used with several biochemical assay types, e.g. binding/unbinding assay, sandwich assay, competition assay, displacement assay, enzymatic assay, etc. It is especially suitable for DNA detection because large scale multiplexing is easily possible and different oligos can be spotted via ink-jet printing on the optical substrate.
- The device and method are suited for sensor multiplexing (i.e. the parallel use of different sensors and sensor surfaces), label multiplexing (i.e. the parallel use of different types of labels) and chamber multiplexing (i.e. the parallel use of different reaction chambers).

- The device and method can be used as rapid, robust, and easy to use point-of-care biosensors for small sample volumes. The reaction chamber can be a disposable item to be used with a compact reader, containing the one or more field generating means and one or more detection means. Also, the device, methods and systems of the present invention can be used in automated high-throughput testing. In this case, the reaction chamber is e.g. a well-plate or cuvette, fitting into an automated instrument.

Finally it is pointed out that in the present application the term "comprising" does not exclude other elements or steps, that "a" or "an" does not exclude a plurality, and that a single processor or other unit may fulfill the functions of several means. The invention resides in each and every novel characteristic feature and each and every combination of characteristic features. Moreover, reference signs in the claims shall not be construed as limiting their scope.

**Claims**

1. A microelectronic sensor device for the detection of target components comprising label-particles (1), comprising

   a) a carrier (11, 111, 211, 311, 411, 511) with a binding surface (12, 112, 512) at which target components can collect;
   b) a light source (21, 121) for emitting an incident light beam (L1, L1a, L1b) into the carrier such that it is totally internally reflected in an investigation region (13, 313a, 313b) at the binding surface;
   c) a light detector (31, 131) for determining the amount of light in a reflected light beam (L2, L2a, L2b).

2. The microelectronic sensor device according to claim 1, **characterized in that** it comprises a field generator (41, 141, 541) for generating a magnetic field (B) and/or an electrical field that can affect the label particles (1).

3. The microelectronic sensor device according to claim 1, **characterized in that** it comprises a sample chamber (2, 102) adjacent to the binding surface (12, 112, 512) in which a sample with target components can be provided.

4. The microelectronic sensor device according to claim 1, **characterized in that** it comprises an evaluation module (32) for determining the amount of target components in the investigation region (13, 313a, 313b) from the measured reflected light beam (L2, L2a, L2b).

5. The microelectronic sensor device according to claim 1, **characterized in that** it comprises a recording module (32) for monitoring the determined amount of reflected light over an observation period.

6. The microelectronic sensor device according to claim 1, **characterized in that** the binding surface comprises a plurality of investigation regions (313a, 313b) at which different incident light beams (L1a, L1b) can be totally internally reflected.

7. The microelectronic sensor device according to claim 6, **characterized in that** it comprises a scanning module for optically coupling the light source and/or the light detector to different investigation regions (313a, 313b) at the binding surface.

8. The microelectronic sensor device according to claim 6, **characterized in that** it comprises a plurality of light sources and/or a plurality of light detectors that are optically coupled to different investigation regions (313a, 313b) at the binding surface (12).

9. The microelectronic sensor device according to claim 2, **characterized in that** it comprises a plurality of individually controllable field generators (41, 141, 541) associated to different investigation regions.

10. The microelectronic sensor device according to claim 1, **characterized in that** it comprises label particles (1) with a mantle of a transparent material, particular a material with a similar refractive index as the carrier (11, 111, 211, 311, 411, 511).

11. The microelectronic sensor device according to claim 1, **characterized in that** it comprises a light detector (31') for determining fluorescence light emitted by target components at the binding surface.

12. A carrier (11, 111, 211, 311, 411, 511) for providing a sample to be investigated, particularly for a microelectronic sensor device according to claim 1, comprising a sample chamber (2, 102) with a transparent inspection wall that has on its interior side a binding surface (12, 112, 512) and on its exterior side at least one optical structure (114, 214, 314a, 314b, 414), wherein the optical structure is designed such that an incident light beam (L1, L1a, L1b) directed from outside the carrier onto the optical structure enters the inspection wall and is totally internally reflected in an investigation region (13, 313a, 313b) at the binding surface, and that a reflected light beam (L2, L2a, L2b) and/or fluorescence light emitted by target components at the binding surface leaves the inspection wall through the optical structure.

13. A well-plate comprising a plurality of carriers according to claim 12.

14. The microelectronic sensor device according to claim 1, the carrier according to claim 12, or the well-plate according to claim 13,
**characterized in that** the carrier (11, 111, 211, 311, 411, 511) consists of a transparent material.

15. The microelectronic sensor device according to claim 1, the carrier according to claim 12, or the well-plate according to claim 13,
**characterized in that** the investigation region (13, 313a, 313b) is covered with at least one capture element that can bind target components.

16. The microelectronic sensor device according to claim 1, the carrier according to claim 12, or the well-plate according to claim 13,
**characterized in that** the surface of the carrier (11, 111, 211, 311, 411, 511) is substantially perpendicular to the incident light beam (L1, L1a, L1b) and/or the reflected light beam (L2, L2a, L2b) in the region where this beam enters or leaves the carrier.

17. The microelectronic sensor device according to claim 1, the carrier according to claim 12, or the well-plate according to claim 13,
**characterized in that** the carrier (11, 111, 211, 311, 411, 511) comprises at least one surface part with a form like a hemisphere (114, 214, 314a, 314b) or a truncated pyramid (414).

18. The microelectronic sensor device according to claim 1, the carrier according to claim 12, or the well-plate according to claim 13,
**characterized in that** the carrier (511) comprises a cavity (515) in which a field generator (541) can at least partially be disposed.

19. The microelectronic sensor device according to claim 1, the carrier according to claim 12, or the well-plate according to claim 13,
**characterized in that** the carrier (11, 111, 211, 311, 411, 511) is designed as an exchangeable component.

20. A method for the detection of target components comprising label particles (1), comprising

a) collecting the target components at a binding surface (12, 112, 512) of a carrier (11, 111, 211, 311, 411, 511);
b) directing an incident light beam (L1, L1a, L1b) into the carrier such that it is totally internally reflected in an investigation region (13, 313a, 313b) at the binding surface (12, 112, 512);
c) determining the amount of light of a reflected light beam (L2, L2a, L2b).

21. The method according to claim 20,
**characterized in that** the label particles (1) are manipulated by a magnetic or electrical field (B), particularly attracted or repelled from the investigation region (13, 313a, 313b).

Fig. 1

Fig. 2

Fig. 3

Fig. 4

Fig. 5

Fig. 6

Fig. 7

Fig. 8

Fig. 9

MP

Fig. 10

1000 ng/ml
100 ng/ml
10 ng/ml
1 ng/ml

0 ng/ml

t    (s)

Fig. 11

SL

0.1 ng/ml

t    (s)

Fig. 12

Fig. 13

Fig. 14

Fig. 15

Fig. 16

Fig. 17

**European Patent Office**

## EUROPEAN SEARCH REPORT

Application Number

EP 07 10 4098

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 650 547 A (FUJI PHOTO FILM CO LTD [JP]) 26 April 2006 (2006-04-26) * paragraph [0122] - paragraph [0125]; claim 12; figures 16,17 * | 1-5,11, 12,20,21 | INV. G01N21/64 |
| X | EP 1 079 226 A1 (LEUZE ELECTRONIC GMBH & CO [DE]; DIAGNOSTISCHE FORSCH STIFTUNG [CH] LE) 28 February 2001 (2001-02-28) | 1,12,17, 20 | |
| Y | * figures 1,5 * | 6-8 | |
| Y | WO 2007/010469 A (KONINKL PHILIPS ELECTRONICS NV [NL]; KLUNDER DERK JAN WILFRED [DE]; BA) 25 January 2007 (2007-01-25) * figure 1 * | 6-8 | |
| X | BLICKLE V, ET AL: "Evanescent light scattering wtih magnetic colloids" APPLIED PHYSICS LETTERS, vol. 87, no. 101102, 2005, pages 1-3, XP002453212 * figure 1 * | 1,12,20 | |

TECHNICAL FIELDS SEARCHED (IPC)

C12Q
G01N

The present search report has been drawn up for all claims

| Place of search | Date of completion of the search | Examiner |
|---|---|---|
| Munich | 28 September 2007 | CROUCHER, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 4098

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2007

| Patent document cited in search report | | Publication date | Patent family member(s) | | Publication date |
|---|---|---|---|---|---|
| EP 1650547 | A | 26-04-2006 | EP 1650548 A2 | | 26-04-2006 |
| | | | EP 1650549 A2 | | 26-04-2006 |
| | | | EP 1650550 A2 | | 26-04-2006 |
| EP 1079226 | A1 | 28-02-2001 | AT 264501 T | | 15-04-2004 |
| | | | DE 59909185 D1 | | 19-05-2004 |
| | | | DK 1079226 T3 | | 10-05-2004 |
| | | | ES 2219962 T3 | | 01-12-2004 |
| | | | PT 1079226 T | | 30-07-2004 |
| | | | US 6929943 B1 | | 16-08-2005 |
| WO 2007010469 | A | 25-01-2007 | NONE | | |

EPO FORM P0459

For more details about this annex : see Official Journal of the European Patent Office, No. 12/82

**EP 1 972 927 A1**

REFERENCES CITED IN THE DESCRIPTION

**Patent documents cited in the description**

- US 20050048599 A1
- WO 2005010543 A1
- WO 2005010542 A2